# EUROPÄISCHE PATENTSCHRIFT

(11) **EP 2 917 050 B1**
(45) Veröffentlichungstag und Bekanntmachung des Hinweises auf die Patenterteilung: **14.12.2016**
(21) Anmeldenummer: 13788945.7
(22) Anmeldetag: 05.11.2013
(51) Int. Cl.: B60C 23/04

(54) **VERFAHREN ZUM ZUORDNEN VON REIFENDRUCKKONTROLLVORRICHTUNGEN ZU DEN VERSCHIEDENEN POSITIONEN EINER ANZAHL VON RÄDERN EINES FAHRZEUGS**
METHOD FOR ASSOCIATING TYRE PRESSURE CONTROL APPARATUSES WITH THE VARIOUS POSITIONS OF A NUMBER OF WHEELS ON A VEHICLE
PROCÉDÉ PERMETTANT D'ASSOCIER DES DISPOSITIFS DE CONTRÔLE DE PRESSION DE GONFLAGE DE PNEUMATIQUES AUX DIFFÉRENTES POSITIONS D'UN CERTAIN NOMBRE DE ROUES D'UN VÉHICULE.

(30) Priorität: 08.11.2012 DE 102012110689
(43) Veröffentlichungstag der Anmeldung: 16.09.2015
(73) Patentinhaber: Huf Hülsbeck & Fürst GmbH & Co. KG, 42551 Velbert (DE)
(72) Erfinder: WAGNER, Markus, 71638 Ludwigsburg (DE); BRAND, Peter, 75249 Kieselbronn (DE); ALEXANDER, Markus, 76133 Karlsruhe (DE)
(74) Vertreter: Twelmeier Mommer & Partner
(86) Internationale Anmeldenummer: PCT/EP2013/072991
(87) Internationale Veröffentlichungsnummer: WO 2014/072269

(56) Entgegenhaltungen:
- EP-A1- 2 450 202
- US-A1- 2011 313 623
- US-A1- 2012 253 590

## Beschreibung

Die Erfindung betrifft ein automatisches Verfahren gemäß dem Oberbegriff des Anspruchs 1 zum Zuordnen von Reifendruckkontrollvorrichtungen eines Reifendruckkontrollsystems eines Fahrzeugs zu den verschiedenen Positionen einer Anzahl von Rädern des Fahrzeugs. Ein solches Verfahren ist in der US 2011/0313623 A1 offenbart.

Auch die EP 2 450 202 A1 offenbart ein Verfahren zum Zuordnen von Reifendruckkontrollvorrichtungen zu den verschiedenen Positionen einer Anzahl von Rädern eines Fahrzeugs. Im Verlauf des Verfahrens wird in den Reifendruckkontrollvorrichtungen ein analoges Beschleunigungssignal gewonnen und anschließend einem Analog-zu-Digital-Wandler zugeführt, der das Beschleunigungssignal abtastet. Das abgetastete Beschleunigungssignal wird einem Tiefpassfilter zugeführt, dessen analoges Ausgangssignal einen Slicer durchläuft, der das Analogsignal in ein digitales Signal wandelt, welches entweder "0" oder "1" lautet, wobei die Ziffern 0 und 1 für zwei vorbestimmte Winkelstellungen stehen, welche um 180° gegeneinander versetzt sind. In diesen immer gleichen Winkelstellungen wird in einem gewissen Zeitraum z. B. vierzig Mal ein Telegramm gesendet, welches die Kennung der Reifendruckkontrollvorrichtung enthält. Das Auftreten dieser Telegramme wird mit dem Auftreten der Signale von den ABS-Sensoren verglichen und die Kennung wird jenem Rad zugeordnet, dessen ABS-Signale am besten zum Auftreten der Telegramme passen. Das häufige Senden von Telegrammen ist nachteilig für die Batterielebensdauer.

Von Reifendruckkontrollvorrichtungen gewonnene analoge Signale abzutasten ist aus der US 2012/0253590 A1 bekannt.

Aus der DE 197 34 323 B4 ist ein Zuordnungsverfahren bekannt, gemäß welchem ein in einer Reifendruckkontrollvorrichtung vorgesehener Umdrehungssensor, z. B. ein Beschleunigungssensor, in einem ersten Zeitintervall an einer bestimmten Winkelposition des Rades ein Telegramm an eine Zentraleinheit sendet und in einem zweiten Zeitintervall an einer davon verschiedenen Winkelposition des Rades ein zweites Telegramm an die Zentraleinheit sendet. Beide Telegramme enthalten eine Kennung, welche für die jeweilige Reifendruckkontrollvorrichtung charakteristisch und für alle anderen Reifendruckkontrollvorrichtungen davon verschieden ist. Der Winkelversatz der beiden Winkelpositionen, in denen die beiden Telegramme gesendet werden, ist vorgegeben und in der Zentraleinheit bekannt.

In der Zeitspanne zwischen den beiden Telegrammen wird die Umdrehungszahl der Räder mittels ABS-Sensoren gemessen, z. B. durch Zählen der am Sensor vorbeilaufenden Zähne eines mit dem Rad mitrotierenden Zahnkranzes. Von der so gewonnenen Zähnezahl wird das größtmögliche ganze Vielfache der auf dem ABS-Zahnkranz vorhandenen Zähne abgezogen. Die danach übrig bleibende Anzahl von Zähnen stellt einen Winkelversatz dar. Der Position desjenigen von den vier ABS-Sensoren, welcher den Winkelversatz liefert, der mit dem von der Reifendruckkontrollvorrichtung vorgegebenen und bekannten Winkelversatz übereinstimmt, wird die Kennung der Reifendruckkontrolleinrichtung zugeordnet. Dieses Verfahren hat den Nachteil, dass die Reifendruckkontrollvorrichtungen für jeden Zuordnungsversuch zweimal senden müssen, auch für vergebliche Zuordnungsversuche, wenn nämlich nicht alle Reifendruckkontrollvorrichtungen unterschiedliche Winkelversätze zeigen. Vergebliche Zuordnungsversuche verschwenden die in einer nicht austauschbaren Batterie der Reifendruckkontrollvorrichtung gespeicherte Energie und verringern dadurch deren Lebensdauer.

Aus der EP 0 806 306 B1 ist ein Zuordnungsverfahren bekannt, mit welchem mit einem Sensor in den Reifendruckkontrollvorrichtungen und mit den ABS-Sensoren die gleiche Messgröße, beispielsweise die Raddrehzahl, gemessen werden soll. Die Messwerte werden an eine Zentraleinheit übermittelt. In der Zentraleinheit werden Messwerte, die von den Sensoren in den Reifendruckkontrollvorrichtungen übermittelt wurden, und Messwerte, die von den ABS-Sensoren geliefert wurden, miteinander verglichen. Bei genügender Übereinstimmung eines der Messwerte aus den Reifendruckkontrollvorrichtungen mit einem der Messwerte aus dem ABS wird auf eine korrekte Zuordnung geschlossen. Eine genügende Übereinstimmung definiert die EP 0 806 306 B1 so, dass die Messwerte der Sensoren in den Reifendruckkontrollvorrichtungen und der ABS-Sensoren bis auf messtechnisch nicht zu vermeidende Ungleichheiten übereinstimmen. Bis dieses Kriterium für alle Räder eines Fahrzeuges erfüllt ist, kann viel Zeit vergehen. Weil ein Reifendruckkontrollsystem jedoch sicherheitsrelevant ist, kommt es darauf an, die korrekte Zuordnung nach dem Start eines Fahrzeuges automatisch und möglichst schnell zu erreichen.

Der vorliegenden Erfindung liegt die Aufgabe zugrunde, ein weiteres Verfahren zum Zuordnen von Reifendruckkontrollvorrichtungen zu den verschiedenen Positionen einer Anzahl von Rädern eines Fahrzeugs zur Verfügung zu stellen, welches sowohl automatisch nach jedem Start eines Fahrzeugs ablaufen kann als auch rasch und batterieschonend zu einem Ergebnis führt.

Diese Aufgabe wird durch ein Verfahren mit den im Patentanspruch 1 angegebenen Merkmalen gelöst. Vorteilhafte Weiterbildungen des Verfahrens sind Gegenstand der abhängigen Ansprüche.

Für das erfindungsgemäße Verfahren hat das Fahrzeug folgende Bestandteile:
- Eine der Anzahl der Radpositionen entsprechende Anzahl von ersten Sensoren, welche jeweils einer der Radpositionen ortsfest zugeordnet sind und die Drehzahl oder Winkelgeschwindigkeit des in der Radposition montierten Rades erfassen können;
- eine mit der Anzahl der montierten Räder übereinstimmende Anzahl von Reifendruckkontrollvorrichtungen, welche an den Rädern mit diesen mitrotierend angebracht sind, mit einer individuellen Kennung versehen sind und einen zweiten Sensor zur Bestimmung einer Messgröße enthalten, aus deren zeitlichem Verlauf die Drehzahl des jeweiligen Rades (Umdrehungen des Rades pro Zeiteinheit) oder die Winkelgeschwindigkeit des Rades abgeleitet werden kann;
- eine Zentraleinheit, in welcher die Zuordnung der Reifendruckkontrollvorrichtungen zu jeweils einer Radposition, nämlich die Kennung der in der Radposition befindlichen Reifendruckkontrollvorrichtung in Verbindung mit der zugehörigen Radposition, gespeichert werden kann. Der Zentraleinheit ist bekannt, welcher erste Sensor welcher Radposition zugeordnet ist.

In dem erfindungsgemäßen Zuordnungsverfahren liefern die ersten Sensoren der Zentraleinheit direkt oder mittelbar wiederholt, nämlich für aufeinanderfolgende Zeitabschnitte ΔT, einen Messwert M1, welcher ein Maß für die Drehzahl oder für die Winkelgeschwindigkeit jenes Rades ist, welchem der jeweilige erste Sensor zugeordnet ist, und senden die Reifendruckkontrollvorrichtungen in zeitlichen Abständen ihre individuelle Kennung an die Zentraleinheit.

In jeder rotierenden Reifendruckkontrollvorrichtung
- wird der Verlauf der Messgröße, aus welcher die Drehzahl oder die Winkelgeschwindigkeit des zugehörigen Rades abgeleitet werden kann, mittels des zweiten Sensors über einen vorgegebenen Drehwinkel ϕ des Rades in Abhängigkeit von der Zeit punktweise erfasst,
- wird in einem an das Erfassen anschließenden ersten Zeitintervall Δt₁ der zeitliche Verlauf der während der Drehung des Rades um den vorgegebenen Drehwinkel ϕ erfassten Messgröße einer digitalen Tiefpassfilterung unterzogen und das Ergebnis der Filterung gespeichert und
- wird aus dem gefilterten Verlauf der Messgröße ein zweiter Messwert M2 bestimmt, welcher ein Maß für die Drehzahl bzw. für die Winkelgeschwindigkeit des zugehörigen Rades im Bereich des beobachteten vorgegebenen Drehwinkels ϕ ist.

Jede Reifendruckkontrollvorrichtung übermittelt am Ende eines gleichzeitig mit dem ersten Zeitintervall Δt₁ beginnenden zweiten Zeitintervalls Δt₂, dessen Dauer nicht kleiner ist als das erste Zeitintervall Δt₁, den zweiten Messwert M2 zusammen mit ihrer Kennung an die Zentraleinheit. Vorzugsweise stimmen das erste Zeitintervall Δt₁ und das zweite Zeitintervall Δt₂ in Dauer und Lage überein.

In der Zentraleinheit werden als Folge dieser Übermittlung die von den Reifendruckkontrollvorrichtungen übermittelten zweiten Messwerte M2 mit den von den ersten Sensoren aller Räder zeitnah erfassten Messwerten M1 verglichen und die Kennung der Reifendruckkontrollvorrichtung jeweils unter jener Radposition gespeichert, in welcher der von einem ersten Sensor gelieferte Messwert M1 am besten mit dem zweiten Messwert M2 übereinstimmt oder - anders ausgedrückt - in welcher der von einem ersten Sensor gelieferte Messwert M1 die kleinste Abweichung vom zweiten Messwert M2 aufweist.

Als zeitnah erfasst können solche Messwerte M1 und M2 gelten, die in Zeiträumen erfasst worden sind, deren Dauer unter normalen Fahrbedingungen die Annahme rechtfertigt, dass sich in ihnen die Geschwindigkeit des Fahrzeugs bzw. die Drehzahl der betroffenen Räder nicht wesentlich geändert hat. Eine wesentliche Änderung würde dann vorliegen, wenn die Abweichung der Geschwindigkeit des Fahrzeugs in dem Zeitraum, in welchem der Messwert M1 erfasst wurde, sich von der Geschwindigkeit des Fahrzeugs in dem Zeitraum, in welchem der Messwert M2 erfasst wurde, so groß ist, dass daraus eine sinnvolle Zuordnung einer Reifendruckkontrollvorrichtung zu einer bestimmten Radposition nicht mehr möglich wäre. Das kann dann der Fall sein, wenn die durch Änderung der Fahrzeuggeschwindigkeit bedingten Drehzahlunterschiede in der gleichen Größenordnung wie die durch Kurvenfahrt oder unterschiedlichen Schlupf einzelner Räder bedingten Drehzahlunterschiede liegen oder größer als diese sind. Als zeitnah erfasste erste Messwerte M1 können z. B. jene ersten Messwerte M1 ausgewählt werden, die in mehreren aufeinander folgenden Zeitabschnitten ΔT gemessen wurden, welche sich mit dem zweiten Zeitintervall Δt₂ überlappen oder an dessen Rand liegen.

Als zeitnah erfasste erste Messwerte M1 könnten auch jene erste Messwerte M1 ausgewählt werden, die in nicht mehr als fünf aufeinander folgenden Zeitabschnitten ΔT gemessen wurden, wobei das Ende des zweiten Zeitintervalls, in welchem in einer Reifendruckkontrollvorrichtung eine Tiefpassfilterung des Verlaufs der vom zweiten Sensor erfassten Messgröße und die Übermittlung des zweiten Messwertes M2 sowie der Kennung an die Zentraleinheit erfolgen, in den nicht mehr als fünf Zeitabschnitten ΔT oder an deren Rand liegt.

Das erfindungsgemäße Verfahren ordnet jedes am Fahrzeug montierte Rad jeweils einer Radposition zu. Ein gegebenenfalls mitgeführtes Ersatzrad wird, solange es nicht zum Einsatz kommt, nicht zugeordnet. Kommt das Ersatzrad zum Einsatz, wird es im nächsten Ablauf des Verfahrens automatisch zugeordnet. Zwischen den Reifendruckkontrollvorrichtungen, welche an den Rädern montiert sind, und der Zentraleinheit, welche irgendwo im Fahrzeug angebracht ist, kann eine Funkverbindung hergestellt werden, über welche die jeweilige Reifendruckkontrollvorrichtung Funktelegramme an die Zentraleinheit sendet. Das Funktelegramm enthält im Normalbetrieb der Reifendruckkontrollvorrichtung als Nachricht die individuelle Kennung der Reifendruckkontrollvorrichtung und eine Information über den gemessenen Reifendruck und/oder über eine gemessene Reifendruckänderung. Das Telegramm kann weitere Informationen enthalten, z. B. über die Temperatur der Reifendruckkontrollvorrichtung und über den Ladezustand einer in der Reifendruckkontrollvorrichtung vorgesehenen Batterie. Ferner ist es bekannt, in den Reifendruckkontrollvorrichtungen einen Beschleunigungssensor vorzusehen, welcher es gestattet, an der Reifendruckkontrollvorrichtung auftretende radiale und/oder tangentiale Beschleunigungen zu messen; aus diesen lässt sich die Drehzahl oder Winkelgeschwindigkeit des Rades ableiten. Wie sich aus einer in der Reifendruckkontrollvorrichtung gemessenen Beschleunigung die Drehzahl des Rades bestimmen lässt, ist dem Fachmann bekannt und im Stand der Technik beschrieben. Für das erfindungsgemäße Zuordnungsverfahren kommt es lediglich darauf an, dass die Reifendruckkontrollvorrichtungen Telegramme senden können, die als Nachricht die individuelle Kennung der jeweiligen Reifendruckkontrollvorrichtung sowie einen Messwert enthalten, welcher ein Maß für die Drehzahl bzw. für die Winkelgeschwindigkeit des zugehörigen Rades ist. Dieser Messwert wird hier als der "zweite Messwert M2" bezeichnet. Dieser zweite Messwert M2 wird von der Reifendruckkontrollvorrichtung zusammen mit der Kennung an die Zentraleinheit übermittelt.

Weitere Messwerte, welche ein Maß für die Drehzahl oder für die Winkelgeschwindigkeit des Rades sind und welche hier als "erste Messwerte M1" bezeichnet werden, werden von ersten Sensoren geliefert, von welchen jeweils ein Sensor einer der Radpositionen fest zugeordnet ist. Die ersten Messwerte M1 werden mit den zeitnah erfassten zweiten Messwerten M2 verglichen und die Kennung der Reifendruckkontrollvorrichtung wird jeweils unter jener Radposition gespeichert, in welcher der vom ersten Sensor gelieferte Messwert am besten mit dem Messwert M2 übereinstimmt.

Erfindungsgemäß wird der Verlauf der vom zweiten Sensor gelieferten Messgröße, aus welcher die Drehzahl oder die Winkelgeschwindigkeit des zugehörigen Rades abgeleitet werden kann, über einen vorgegebenen Drehwinkel ϕ des Rades in Abhängigkeit von der Zeit nur punktweise erfasst. Die punktweise erfasste Messgröße wird noch in der Reifendruckkontrollvorrichtung einer Tiefpassfilterung unterzogen. Die Tiefpassfilterung hat den Vorteil, dass Störungen des Verlaufs der Messgröße, welche insbesondere durch Fahrbahnunebenheiten und durch vom Fahrzeug selbst ausgehende Vibrationen verursacht sein können, durch die Filterung ganz oder teilweise eliminiert werden. Der gefilterte Verlauf der Messgröße eignet sich besser als der ungefilterte Verlauf der Messgröße dazu, aus dem Verlauf die zeitliche Änderung der Drehwinkelstellung des Rades und daraus die Drehzahl oder die Winkelgeschwindigkeit des Rades abzuleiten und den vorgegebenen Drehwinkel des Rades festzulegen, über welchen die vom zweiten Sensor gelieferte Messgröße und deren Verlauf erfasst werden sollen.

Für die Tiefpassfilterung ist es von Vorteil, wenn der Verlauf der Messgröße nur punktweise erfasst wird. Digitale Tiefpassfilter sind bekannt. Da die heutigen Reifendruckkontrollvorrichtungen ohnehin einen Mikroprozessor oder einen Mikrocontroller oder eine dergleichen digitale Rechenschaltung enthalten, ist die Tiefpassfilterung mittels eines digitalen Tiefpassfilters in der Reifendruckkontrollvorrichtung ohne weiteres möglich; sie erfordert lediglich ein Programm, mit welchem die digitale Rechenschaltung die Tiefpassfilterung durchführt. Aus dem gefilterten Verlauf der vom zweiten Sensor gelieferten Messgröße lassen sich die Drehzahl oder die Winkelgeschwindigkeit und der Drehwinkel ϕ des Rades, über dessen Bereich der Verlauf der Messgröße erfasst werden soll, sehr viel genauer ermitteln als mit Hilfe eines ungefilterten Verlaufs der Messgröße. Die Tiefpassfilterung liefert einen wesentlichen Beitrag dazu, das Zuordnungsverfahren zeitsparender und - mit Blick auf die Stromversorgung der Reifendruckkontrollvorrichtung durch eine nicht austauschbare Batterie - energiesparender durchzuführen. Die Tiefpassfilterung erfordert eine gewisse Dauer und Maßnahmen, um die Zeitabschnitte, in welchen die ersten Sensoren und die zweiten Sensoren ihre Messgrößen erfassen, miteinander zu synchronisieren. Es hat sich jedoch gezeigt, dass das kein Nachteil ist. Im Gegenteil: Durch die um das zweite Zeitintervall Δt₂ verzögerte Übermittlung der zweiten Messwerte M2 an die Zentraleinheit verschiebt sich der vom Ende des vorgegebenen Drehwinkels ϕ des Rades abgeleitete Zeitpunkt, zu welchem die Reifendruckkontrollvorrichtung ein Telegramm, welches den zweiten Messwert M2 zusammen mit ihrer Kennung enthält, an die Zentraleinheit übermittelt. Diese zeitliche Verschiebung um das zweite Zeitintervall Δt₂ führt dazu, dass sich die Winkelposition, in welcher die Reifendruckkontrollvorrichtung sendet, um einen Winkel Δϕ verschiebt. Dieser Winkel Δϕ ist jedoch nicht konstant, sondern hängt von der Geschwindigkeit des Fahrzeugs bzw. von der Drehzahl des Rades ab. Dadurch wird ohne weiteres Zutun verhindert, dass die Reifendruckkontrollvorrichtungen immer in der gleichen Winkelposition senden. Das wäre nämlich sehr nachteilig, weil die Güte des Empfangs der Telegramme durch die Zentraleinheit von der Winkelstellung der Reifendruckkontrollvorrichtung im Sendezeitpunkt abhängt und von Fahrzeugtyp zu Fahrzeugtyp variiert. Bei einer Übermittlung der Telegramme aus immer der gleichen Drehwinkelstellung der Reifendruckkontrollvorrichtung heraus würde das Risiko bestehen, dass der Empfang in der Zentraleinheit so schlecht ist, dass nur ein Teil der ausgesendeten Telegramme verwertbar empfangen wird. Zum Ausgleich würde das mehr Sendevorgänge, mehr Zeit und einen höheren Energieverbrauch in den Reifendruckkontrollvorrichtungen erfordern, bis eine eindeutige Zuordnung der Reifendruckkontrollvorrichtungen zu den Radpositionen erreicht ist. Das Einführen einer bestimmten Zeitverzögerung Δt₁ bzw. Δt₂ bei der Messwertverarbeitung in der Reifendruckkontrollvorrichtung führt erfindungsgemäß ohne weiteres dazu, dass die Winkelstellung, in welcher die Reifendruckkontrollvorrichtung ihre Telegramme sendet, abhängig von der Geschwindigkeit des Fahrzeugs variiert. Dadurch ist sichergestellt, dass die weitaus meisten der gesendeten Telegramme von der Zentraleinheit in verwertbarer Güte empfangen werden.

Ein Vergleich des erfindungsgemäßen Zuordnungsverfahrens mit anderen modernsten Zuordnungsverfahren, bei welchen Drehzahlen oder Drehwinkel miteinander verglichen werden, die zum einen von Sensoren in den Reifendruckkontrollvorrichtungen und zum anderen durch ABS-Sensoren geliefert werden, zeigt, dass das erfindungsgemäße Verfahren die gewünschte Zuordnung wesentlicher schneller und energiesparender erreicht.

Als erste Sensoren werden zweckmäßigerweise, wie auch im Stand der Technik, ABS-Sensoren verwendet, von denen je ein ABS-Sensor einer der Radpositionen des Fahrzeugs fest zugeordnet ist. Als zweiter Sensor, der in der Reifendruckkontrollvorrichtung benötigt wird, wird vorzugsweise ein solcher Sensor verwendet, welcher ein Signal mit einem periodischen Verlauf liefert. Die Periode soll konstant sein, solange wie sich das Fahrzeug mit konstanter Geschwindigkeit geradeaus oder in einer Kurve mit konstantem Kurvenradius bewegt. Diese Anforderung erfüllen insbesondere Beschleunigungssensoren, welche einerseits auf die am Rad auftretende Zentrifugalbeschleunigung und anderseits auf die Erdbeschleunigung ansprechen. Während die Richtung der Erdbeschleunigung gleich bleibt, ändert sich die Richtung im Verlauf einer jeden Umdrehung des Rades. Die Erdbeschleunigung überlagert die Zentrifugalbeschleunigung und moduliert sie annähernd sinusförmig, so dass aus dem Verlauf der resultierenden Beschleunigung auf die Drehzahl des Rades geschlossen werden kann.

Eine andere Möglichkeit, durch einen in der Reifendruckkontrollvorrichtung vorgesehenen Sensor die Drehzahl des Rades festzustellen, besteht darin, einen Sensor zu verwenden, welcher auf die Verformung der Lauffläche des Reifens anspricht, wenn die Reifendruckkontrollvorrichtung in den Latsch des Reifens eintritt und aus dem Latsch wieder austritt, was bei jeder Umdrehung des Rades geschieht. Ein Sensor, mit welchem das möglich ist, ist z. B. in der DE 10 2010 038 136 A1 offenbart. Das erste Zeitintervall Δt₁, in welchem in der Radelektronik die vom zweiten Sensor erfasste Messgröße gefiltert wird, muss grundsätzlich nicht konstant sein, ist aber zweckmäßigerweise konstant, zumal für die Dauer der Tiefpassfilterung und für das Speichern des Ergebnisses der Tiefpassfilterung von einem gleichbleibenden Zeitbedarf ausgegangen werden kann.

Auch das zweite Zeitintervall Δt₂, dessen Beginn mit dem Beginn des ersten Zeitintervalls Δt₁ zusammenfällt, muss grundsätzlich nicht konstant sein, ist aber vorzugsweise konstant, weil bereits dadurch in Verbindung mit wechselnden Geschwindigkeiten des Fahrzeugs bzw. mit wechselnden Drehzahlen der Räder erreicht wird, dass die Reifendruckkontrollvorrichtungen ihre Signale aus unterschiedlichen Winkelstellungen der Räder an die Zentraleinheit senden und sicherstellen, dass keine Reifendruckkontrollvorrichtung dauerhaft oder über längere Zeit aus ungünstigen Winkelstellungen des Rades Telegramme sendet, welche die Zentraleinheit nicht oder zu schwach oder unvollständig empfängt.

Das zweite Zeitintervall Δt₂ kann nicht vor dem ersten Zeitintervall Δt₁ enden, kann aber später enden. Vorzugsweise fallen das erste Zeitintervall Δt₁ und das zweite Zeitintervall Δt₂ der Einfachheit halber zusammen.

Das Ende des ersten Zeitintervalls Δt₁ wird zweckmäßigerweise so gelegt, dass es mit jenem Zeitpunkt zusammenfällt, an welchem das Ende des gefilterten Verlaufs der vom zweiten Sensor erfassten Messgröße das Tiefpassfilter verlassen hat und der gefilterte Verlauf in der Reifendruckkontrollvorrichtung gespeichert ist, was praktisch zeitgleich geschieht.

Vorzugsweise erfasst der zweite Sensor in den Reifendruckkontrollvorrichtungen seine Messgröße mehrmals jeweils für eine zweite Zeitspanne T2, welche das Rad benötigt, um sich wenigstens um 180° zu drehen, insbesondere, um sich um ein ganzzahliges Vielfaches von 180° zu drehen, vorzugsweise um 720° (das sind zwei volle Umdrehungen). In diesem Fall liegt das Ende der ersten Zeitspanne Δt₁ jeweils am Ende einer Periode der gefilterten Messgröße, vorzugsweise an einem Zeitpunkt, welcher im zeitlichen Verlauf der Messgröße am einfachsten und am besten reproduzierbar zu bestimmen ist. Bei einem Beschleunigungssensor wäre das der Fall, wenn sich die Reifendruckkontrollvorrichtung gerade auf dem höchsten Punkt ihrer Bahn (12-Uhr-Stellung) oder auf dem niedrigsten Punkt ihrer Bahn (6-Uhr-Stellung) oder in der 3-Uhr-Stellung oder in der 9-Uhr-Stellung befindet. Bei einem Sensor, welcher auf die Verformung der Lauffläche im Latschdurchlauf des Reifens anspricht, würde man den Anfang und das Ende des Zeitintervalls Δt₁ in jene charakteristische Stelle im Verlauf der zweiten Messgröße legen, welche entweder durch den Eintritt der Reifendruckkontrollvorrichtung in den Latsch oder durch den Austritt der Reifendruckkontrollvorrichtung aus dem Latsch verursacht ist.

Das erste Zeitintervall Δt₁, in welchem in den Reifendruckkontrollvorrichtungen der Verlauf der vom zweiten Sensor erfassten Messgröße einer Tiefpassfilterung unterzogen wird, oder der Drehwinkel Δϕ, um welchen sich das Rad während des ersten Zeitintervalls Δt₁ und/oder des zweiten Zeitintervalls Δt₂ weitergedreht hat, kann der Zentraleinheit als bekannt vorgegeben sein. Das bietet sich insbesondere für den Fall an, dass die Zeitintervalle Δt₁ und Δt₂ konstant gewählt werden. Die Zentraleinheit weiß dann bei jedem Signal oder Telegramm, welches sie beim Ausführen des erfindungsgemäßen Verfahrens von einer Reifendruckkontrollvorrichtung empfängt, in welchem Zeitraum der zweite Sensor die Messgröße, welche dem übermittelten zweiten Messwert M2 zugrunde liegt, gemessen hat. Das ist für die Zentraleinheit wichtig, um zu entscheiden, welchen Zeitraum der Drehzahlmessung mittels ABS-Sensoren sie für einen Vergleich mit dem zweiten Messwert M2 heranzieht.

Das erste Zeitintervall Δt₁ und/oder das zweite Zeitintervall Δt₂ können der Zentraleinheit aber auch als ein dritter Messwert M3 übermittelt werden, und zwar jeweils zusammen mit der Kennung und mit der gefilterten Messgröße oder mit dem daraus abgeleiteten zweiten Messwert M2. Das hat den Vorteil, dass die Reifendruckkontrollvorrichtungen die Zeitintervalle Δt₁ und Δt₂ autonom, z. B. abhängig von der Drehzahl, verändern können, um in der jeweiligen Reifendruckkontrollvorrichtung das Erfassen der Messgröße, aus welcher die Drehzahl des betreffenden Rades abgleitet werden kann, zu optimieren.

Der in der Reifendruckkontrollvorrichtung gewonnene Messwert M2, gegebenenfalls auch der Messwert M3, wird in der Zentraleinheit vorzugsweise zusätzlich dazu verwendet, um die Winkelposition zu bestimmen, welche das Rad am Ende des ersten Zeitintervalls Δt₁ und/oder am Ende des zweiten Zeitintervalls Δt₂ hatte. Das kann beim Vergleichen des Messwertes M2 mit den von den ABS-Sensoren gewonnenen Messwerten M1 verwendet werden, um die Aussagekraft des Vergleichs zu optimieren. Außerdem kann die Zentraleinheit anhand des Messwertes M3 gestützt auf Erfahrungen darauf schließen, ob sich die Reifendruckkontrollvorrichtung zum Zeitpunkt der Übermittlung in einer für die Übermittlung günstigen oder ungünstigen Stellung befunden hat, und dies in die Bewertung der Aussagekraft des Vergleichs für die Bestimmung der korrekten Zuordnung einbeziehen.

Es hat Vorteile, wenn die Reifendruckkontrollvorrichtung die Möglichkeit hat, die Dauer des ersten Zeitintervalls Δt₁, in welchem in der Reifendruckkontrollvorrichtung die erfasste Messgröße einer Tiefpassfilterung unterzogen wird, und/oder die Dauer des zweiten Zeitintervalls Δt₂ geschwindigkeitsabhängig oder abhängig von der Drehzahl des jeweiligen Rades zu wählen, und zwar derart, dass die Dauer des ersten Zeitintervalls Δt₁ und/oder die Dauer des zweiten Zeitintervalls Δt₂ mit zunehmender Geschwindigkeit des Fahrzeuges abnimmt. Diese Anpassung an die Geschwindigkeit des Fahrzeuges bzw. an die Drehzahl des jeweiligen Rades kann stufenweise oder kontinuierlich erfolgen. Vorzugsweise erfolgt die Anpassung stufenweise, insbesondere in zwei oder drei über den gesamten Geschwindigkeitsbereich bzw. den Drehzahlbereich des Rades verteilten Stufen. Dadurch kann erreicht werden, dass die Winkelverschiebung der Reifendruckkontrollvorrichtung zwischen dem Ende des Messintervalls und dem Sendezeitpunkt, also der Winkel, um den sich das Rad im zweiten Zeitintervall Δt₂ weiterdreht, auf den Bereich von 0° bis 180° beschränkt ist. Diese Beschränkung kann man z. B. dafür ausnutzen, dass die Reifendruckkontrollvorrichtung die zweiten Messwerte M2 der Zentraleinheit zweimal übermittelt, und zwar zum ersten Mal am Ende des zweiten Zeitintervalls Δt₂ und zum zweiten Mal vorzugsweise nach einer weiteren Drehung des Rades und der Reifendruckkontrollvorrichtung um eine halbe Umdrehung des Rades. Auf diese Weise kann man sicherstellen, dass wenigstens eine der beiden Übermittlungen ein- und desselben Messwertes M2 aus einer Position der Reifendruckkontrollvorrichtung erfolgt, welche für den Empfang durch die Zentraleinheit günstig ist. Das trägt dazu bei, dass das erfindungsgemäße Zuordnungsverfahren wesentlich schneller beendet werden kann als konkurrierende Verfahren im Stand der Technik.

Vorzugsweise wird eine Zentraleinheit verwendet, in welcher für jede Radposition mehr als eine Kennung gespeichert werden kann und vorzugsweise auch gespeichert wird. Das macht es möglich, die Kennungen für wenigstens zwei Sätze von Rädern, z. B. für einen Satz Sommerräder und für einen Satz Winterräder, zu speichern, so dass beim einem Wechsel von Sommerrädern auf Winterräder die Kennungen der eingewechselten Reifendruckkontrollvorrichtungen in der Zentraleinheit bereits vorhanden sind.

Die ersten Sensoren, das sind die den Radpositionen fest zugeordneten Sensoren, vorzugsweise ABS-Sensoren, messen die Drehzahl bzw. die Winkelgeschwindigkeit des Rades oder eine der Drehzahl bzw. Winkelgeschwindigkeit proportionale Größe. Die Messwerte werden für die Zwecke des Vergleichs mit den entsprechenden Messwerten, die von den Reifendruckkontrollvorrichtungen geliefert werden, für eine vorgegebene Dauer gespeichert. Die Speicherung kann in der Zentraleinheit erfolgen, sie kann aber auch in einem gesonderten Speicher erfolgen, auf welchen die Zentraleinheit zugreifen kann. Die Messwerte M1 der ersten Sensoren werden vorzugsweise für eine erste Zeitspanne T1 gespeichert, die zweimal so lang bis fünfmal so lang ist wie der vorgegebene Zeitabschnitt ΔT für die Messung der Drehzahl bzw. Winkelgeschwindigkeit des jeweiligen Rades durch den ersten Sensor. Diese Zeitspanne T1 genügt, um den Vergleich der ersten Messwerte M1 mit den in den Reifendruckkontrolleinrichtungen zeitnah gewonnenen zweiten Messwerten M2 durchzuführen und verlangt nur einen bescheidenen Speicherplatz. Der Zeitabschnitt ΔT für die einzelnen Drehzahlmessungen bzw. Winkelgeschwindigkeitsmessungen durch den ersten Sensor beträgt zweckmäßigerweise zwischen 10 ms und 100 ms, vorzugsweise 15 ms bis 30 ms. Das ist für das Ermitteln der ersten Messwerte M1, welche zeitnah zu den zweiten Messwerten M2 der Reifendruckkontrollvorrichtung erfasst wurden, günstig.

Im Normalbetrieb des Reifendruckkontrollsystems, in welchem der Zentraleinheit von allen Reifendruckkontrollvorrichtungen nur Kennungen übermittelt werden, die bereits korrekt zugeordnet in der Zentraleinheit gespeichert sind, senden die Reifendruckkontrollvorrichtungen, wenn nicht ein schneller Druckabfall detektiert wird, in relativ großen Zeitabständen, z. B. einmal pro Minute. Im erfindungsgemäßen Zuordnungsverfahren sollen die Reifendruckkontrollvorrichtungen jedoch in kürzeren Zeitabständen senden, im Idealfall nach jeweils zwei Radumdrehungen, solange bis die Reifendruckkontrollvorrichtungen den Radpositionen zugeordnet sind.

Der vorgegebene Drehwinkel ϕ, um welchen sich die Räder für das Bestimmen des zweiten Messwertes mit dem zweiten Sensor drehen sollen, wird vorzugsweise so gewählt, dass die Messung stets in einer vorgegebenen Drehwinkelstellung des zweiten Sensors beginnt. Wenn es sich bei dem zweiten Sensor um einen Beschleunigungssensor handelt, dann zweckmäßigerweise in der 3-Uhr-Stellung oder in der 9-Uhr-Stellung der Reifendruckkontrollvorrichtung, denn in dieser Stellung hat der Wechselanteil der Amplitude des gefilterten Beschleunigungssignals des zweiten Sensors einen Nulldurchgang, der besonders einfach zu bestimmen ist. Diese Bestimmung kann in der Reifendruckkontrollvorrichtung autonom vorgenommen werden, so dass sich die in der Reifendruckkontrollvorrichtung vorgesehene Mess- und Auswerteschaltung nach der Aktivierung durch eine innere Uhr oder durch den einen Fahrtbeginn meldenden Beschleunigungssensor selbsttätig auf das gewünschte Zeitintervall, also z. B. beginnend in der 3-Uhr-Position der Reifendruckkontrollvorrichtung, einstellen kann. Wenn als zweiter Sensor anstelle eines Beschleunigungssensors ein Sensor verwendet wird, der auf die Verformung der Lauffläche des Reifens anspricht, würde sich die Mess- und Auswerteschaltung selbsttätig entweder auf den Eintritt der Reifendruckkontrollvorrichtung in den Latsch oder auf den Austritt der Reifendruckkontrollvorrichtung aus dem Latsch, die ebenfalls leicht feststellbar sind, einstellen. Dieses Einstellen geschieht zweckmäßigerweise nicht anhand des ungefilterten Messsignals des zweiten Sensors, sondern anhand des gefilterten Signals. Dafür ist es vorteilhaft, wenn das Tiefpassfilter als digitales Tiefpassfilter ausgebildet ist. Digitale Tiefpassfilter sind dem Fachmann bekannt, sie können mit Hilfe eines Mikroprozessors oder Mikrocontrollers oder dergleichen digitale Rechenschaltung, welche in einer Reifendruckkontrollvorrichtung üblicherweise vorhanden ist, ohne besonderen Aufwand verwirklicht werden.

Ist die Mess- und Auswerteschaltung mit dem zweiten Sensor einmal aktiviert, dann wird die Messgröße, welche ein Maß für die Drehzahl bzw. für die Winkelgeschwindigkeit des Rades ist, fortlaufend gemessen und fortlaufend für eine vorgegebene Anzahl von Perioden - oder, anders ausgedrückt, für eine vorgegebene Anzahl von Umdrehungen - ausgewertet, und zwar vorzugsweise jeweils für zwei aufeinanderfolgende Perioden. Nur wenn diese beiden Perioden innerhalb einer vorgegebenen Toleranzgrenze übereinstimmen, was eine gleichbleibende Geschwindigkeit des Rades bedeutet, wird der sich aus der Länge der Periode ergebende zweite Messwert M2, welcher ein Maß für die Drehzahl oder Winkelgeschwindigkeit ist, an die Zentraleinheit übermittelt. Ist der Unterschied zwischen den beiden Periodenlängen größer als die vorgegebene Toleranz, wird die Messung nicht für die Ermittlung der Zuordnungen verwendet und die Batterie der Reifendruckkontrollvorrichtung geschont.

Die aus dem vorgegebenen Drehwinkel ϕ und der dafür benötigten zweiten Zeitspanne T2 berechnete Drehzahl oder Winkelgeschwindigkeit des Rades kann von der Reifendruckkontrollvorrichtung am Ende des zweiten Zeitintervalls Δt₂ zusammen mit der Kennung der Reifendruckkontrollvorrichtung und gegebenenfalls zusammen mit dem zweiten Zeitintervall Δt₂ oder mit dem Drehwinkel Δϕ, um welchen sich das Rad während des zweiten Zeitintervalls Δt₂ weitergedreht hat, an die Zentraleinheit übermittelt werden. Alternativ kann die zweite Zeitspanne T2, die das Rad für eine Drehung um den vorgegebenen Drehwinkel ϕ benötigt hat, als Maß für die Drehzahl oder die Winkelgeschwindigkeit des Rades an die Zentraleinheit übermittelt werden. Die Zentraleinheit hat damit alle Daten, die sie für den Vergleich mit den Drehzahlen benötigt, die von den ortsfesten ersten Sensoren an die Zentraleinheit übermittelt werden.

Das Tiefpassfilter, welches für die Filterung verwendet wird, hat zweckmäßigerweise eine Grenzfrequenz zwischen 1 Hz und 5 Hz. Eine solche Grenzfrequenz hat sich für den vorliegenden Zweck bewährt.

Die Ergebnisse der Vergleiche der von den ersten Sensoren und von den zweiten Sensoren gewonnenen Drehzahlen bzw. Winkelgeschwindigkeiten werden vorzugsweise statistisch ausgewertet. Es ist nicht das Ziel, zu erreichen, dass bereits ein einziger Durchgang des Verfahrens die exakte Zuordnung ermöglicht. Vielmehr ist es vorteilhafter, das Verfahren so oft zu durchlaufen, bis eine statistische Auswertung der Ergebnisse eine sichere Zuordnung erlaubt. Die in jedem Durchlauf des Verfahrens gewonnenen Zuordnungen der Kennungen zu einer bestimmten Radposition werden gesammelt und nach der Häufigkeit ihres Auftretens analysiert. Für jede Radposition wird dann die ihr am häufigsten zugeordnete Kennung als die zutreffende endgültig gespeichert.

Bei einem Fahrzeug mit vier Rädern gibt es 16 verschiedene Zuordnungsmöglichkeiten. Diese kann man - bildlich gesprochen - in einer Matrix anordnen. In die 16 Felder der Matrix kann man nun die in jedem Durchlauf des Verfahrens gewonnenen Zuordnungen als Treffer eintragen. Mit zunehmender Anzahl der Durchläufe des Verfahrens wird sich in der Matrix die richtige Zuordnung einer Kennung zu einer bestimmten Radposition dadurch zu erkennen geben, dass ihre Trefferzahl signifikant höher ist als bei den anderen drei möglichen Zuordnungen. Bei der statistischen Auswertung in der Zentraleinheit kann man ein Kriterium vorgeben, welches erfüllt sein muss, um das Zuordnungsverfahren abschließen zu können. Das Kriterium könnte z. B. so lauten, dass eine Zuordnung einer Kennung zu einer bestimmten Radposition dann als zutreffend eingestuft wird, wenn sie wenigstens fünfmal so häufig aufgetreten ist wie die Zuordnung der anderen drei Kennungen zu derselben Radposition. Die Wahl des Faktors "5" ist nur ein Beispiel, sie hängt von dem Grad an Sicherheit ab, der gewünscht ist, und kann durch Erfahrungen verändert werden, welche mit dem Verfahren gemacht werden.

Ist auf diese Weise jede Kennung einer Radposition zugeordnet, kann das Verfahren beendet und können die Zuordnungen endgültig gespeichert werden.

Wann das nächste Zuordnungsverfahren durchgeführt wird, hängt von den Vorgaben des Fahrzeugherstellers ab. Im Allgemeinen wird das Zuordnungsverfahren jedes Mal dann gestartet, wenn das Fahrzeug neu gestartet wird. Bei Fahrzeugen, die zur Reduzierung des Treibstoffverbrauchs und der Abgasmenge beim Halt vor roten Ampeln den Motor selbsttätig abschalten und durch Betätigen des Gaspedals wieder starten, wird man den erneuten Start des Zuordnungsverfahrens natürlich ausschließen wollen und zu diesem Zweck einen erneuten Start des Zuordnungsverfahrens nur dann vornehmen, wenn die Standzeit des Fahrzeuges eine bestimmte Mindestdauer überschritten hat. Auf jeden Fall wird das Zuordnungsverfahren aber immer dann gestartet, wenn nach einer längeren Standzeit des Fahrzeugs der Zentraleinheit wiederholt eine oder mehrere Kennungen übermittelt werden, die von den zuletzt zugeordneten Kennungen verschieden sind.

Sind Zuordnungen erst einmal in der Zentraleinheit gespeichert, besteht die Möglichkeit, bei einem erneuten Start des Fahrzeugs das Zuordnungsverfahren abzukürzen und z. B. dann zu beenden, wenn der Zentraleinheit zu den gegebenen Radpositionen mehrmals erneut jene Kennung übermittelt wird, die schon bisher unter derselben Radposition gespeichert war. Die Anzahl der Durchläufe des Verfahrens, die nach einem erneuten Start des Fahrzeugs mindestens ablaufen sollen, können vom Fahrzeughersteller vorgegeben werden. Eine Verkürzung des Zuordnungsverfahrens ist geeignet, die Lebensdauer der in den Reifendruckkontrollvorrichtungen vorhandenen Batterien, die in der Regel nicht austauschbar sind, zu erhöhen.

Der weiteren Erläuterung der Erfindung dienen die beigefügten Zeichnungen.

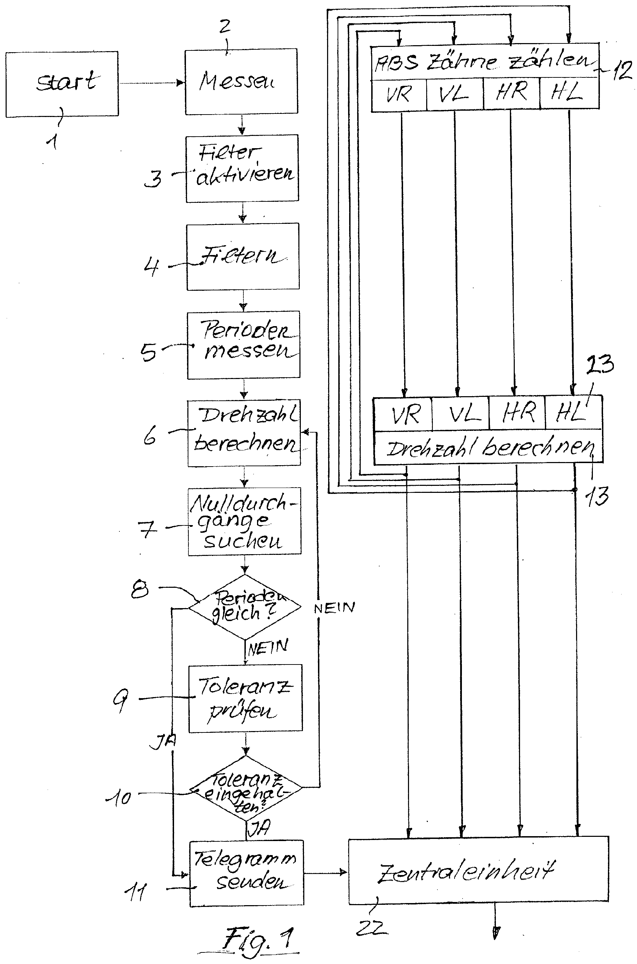

- Figur 1: zeigt in einem Fließdiagramm die Gewinnung von Messwerten, die ein Maß für die Drehzahl bzw. für die Winkelgeschwindigkeit von Rädern eines Fahrzeugs sind, zum Einen mit Hilfe von ABS-Sensoren und zum Anderen mit Hilfe von Reifendruckkontrollvorrichtungen, und das Übermitteln dieser Signale an eine Zentraleinheit.

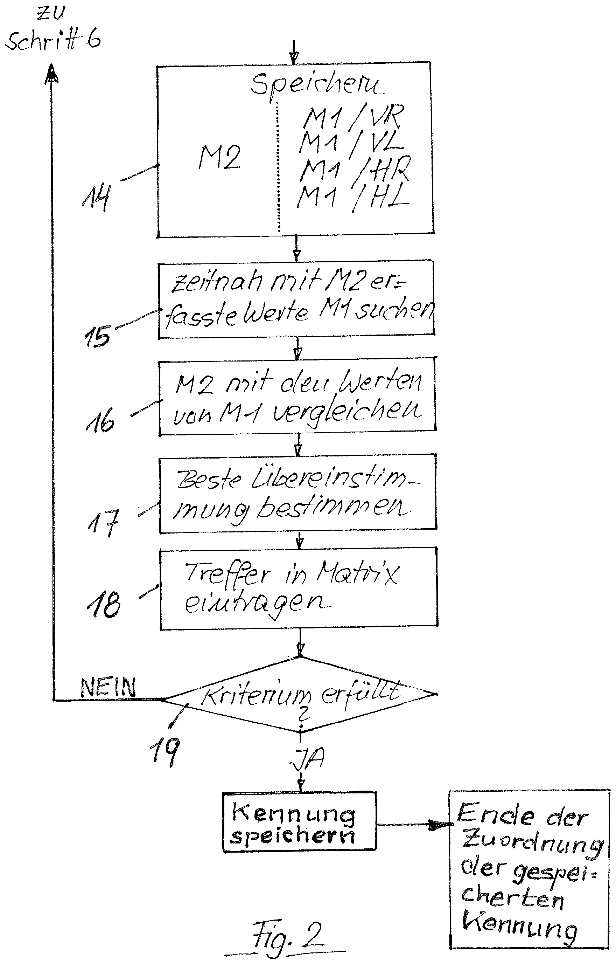

- Figur 2: zeigt ein an das Fließdiagramm aus Figur 1 anschließendes Fließdiagramm für die Auswertung der gemäß Figur 1 gewonnenen Messwerte in der Zentraleinheit.

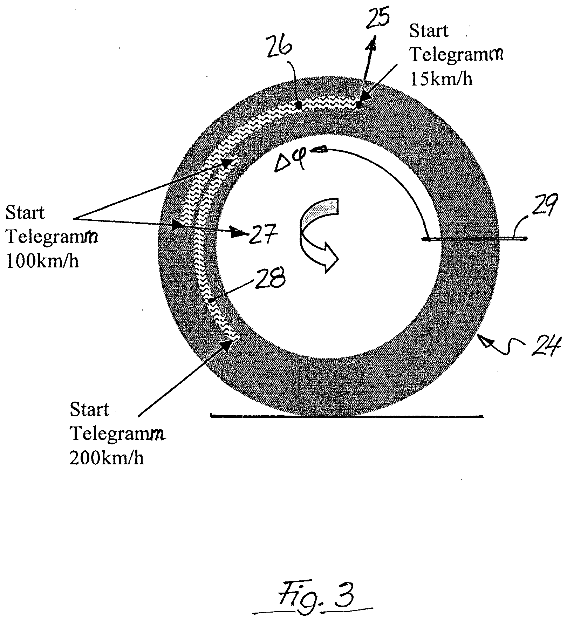

- Figur 3: zeigt schematisch an einem Beispiel, wie sich an einem sich drehenden Rad die Lage der Reifendruckkontrollvorrichtung im Zeitintervall Δt₂ zwischen der Erfassung einer Messgröße, aus welcher sich die Drehzahl oder die Winkelgeschwindigkeit eines Rades ableiten lässt, und der Übermittlung eines daraus gewonnenen Messwertes durch die Reifendruckkontrollvorrichtung an die Zentraleinheit weiterdreht.

Gemäß Figur 1 beginnt das Verfahren in der Reifendruckkontrollvorrichtung eines Rades, welches an einem Fahrzeug montiert ist, im Schritt 1 mit einem Startsignal, welches in der Reifendruckkontrollvorrichtung selbst erzeugt wird, z. B. dadurch, dass ein Beschleunigungssensor feststellt, dass sich das Rad dreht, nachdem er für eine vorgegebene Dauer, z. B. mehr als eine halbe Stunde, keine Bewegung feststellen konnte. Ausgelöst durch das Startsignal wird in einem Schritt 2 begonnen, die an der Reifendruckkontrollvorrichtung auftretende Beschleunigung fortlaufend zu messen und die Beschleunigungsmesswerte jeweils für die Dauer einer vorgegebenen Anzahl von Perioden punktweise zu speichern.

Das punktweise Speichern kann so vonstatten gehen, dass ein vom Beschleunigungssensor geliefertes analoges Beschleunigungssignal punktweise, insbesondere in gleichbleibenden Zeitabständen, abgetastet wird und die auf diese Weise für eine vorgegebene Anzahl von Perioden des Beschleunigungssignals ermittelten diskreten Beschleunigungswerte in der Reifendruckkontrollvorrichtung gespeichert werden. Im Speicher liegt dann der zeitliche Verlauf der Beschleunigung punktweise vor. Das ist für eine digitale Weiterverarbeitung von Vorteil.

In einem Schritt 3 wird ein digitales Tiefpassfilter aktiviert, welches in einem Schritt 4 den punktweise gespeicherten Verlauf des Signals des Beschleunigungssensors einer digitalen Tiefpassfilterung unterzieht. Das gefilterte Beschleunigungssignal liegt ebenfalls als eine Folge diskreter Beschleunigungswerte vor und hat einen annähernd sinusförmigen Verlauf, überlagert von der gleichbleibenden Erdbeschleunigung als Offset. Die Länge der Periode des gefilterten Beschleunigungssignals ist der Drehzahl des Rades umgekehrt proportional.

Bereits das Beobachten nur einer halben Periode des Beschleunigungssignals erlaubt eine Aussage über die Drehzahl des Rades. Eine genauere Aussage ist jedoch möglich, wenn nicht nur eine halbe Periode des Beschleunigungssignals ausgewertet wird, sondern eine größere Länge des Beschleunigungssignals. Es hat sich als vorteilhaft erwiesen, jeweils zwei Perioden des Beschleunigungssignals auszuwerten. Deshalb wird in einem Schritt 5 für einen zwei Perioden langen Abschnitt des gefilterten Beschleunigungssignals die Länge der Periode gemessen und in einem Schritt 6 daraus die Drehzahl des Rades berechnet.

In einem Schritt 7 werden der Beginn und das Ende der beiden Perioden des gefilterten Beschleunigungssignals aufgesucht. Der Beginn und das Ende einer Periode lassen sich bei einem sinusförmigen Verlauf am besten anhand der Nulldurchgänge des Verlaufs feststellen. Das geschieht im Schritt 7 auf rechnerische Weise, indem entweder der Verlauf des gefilterten Beschleunigungssignals differenziert und die Extremwerte des Verlaufs aufgesucht werden, oder indem im Verlauf des Beschleunigungssignals der von der Erdbeschleunigung herrührende Offset eliminiert und die Nullstellen des verbleibenden Wechselanteils des Beschleunigungssignals aufgesucht werden.

In einem Schritt 8 werden die Dauer der ersten Periode und die Dauer der zweiten Periode des Beschleunigungssignals gemessen und miteinander verglichen. Sind sie gleich, wird in einem Schritt 11 der aus den beiden Perioden bestimmte Messwert, welcher ein Maß für die Drehzahl des Rades ist und bei welchem es sich um den "zweiten" Messwert M2 im Sinne der Patentansprüche handelt, per Funk an die Zentraleinheit 22 übermittelt. Das an die Zentraleinheit 22 übermittelte Funktelegramm enthält zusätzlich die Kennung der Reifendruckkontrollvorrichtung sowie vorzugsweise die Dauer des "zweiten" Messintervalls Δt₂, um welches die Übermittlung des Funktelegramms gegenüber dem Ende der in Echtzeit vom Beschleunigungssensor erfassten zweiten Periode des Beschleunigungssignals verzögert ist. Dieses zweite Zeitintervall Δt₂ ist ausreichend lang bemessen, um die Filterung des Beschleunigungssignals sowie die Messung und Prüfung der Periodenlängen zu ermöglichen.

Nach der Übermittlung des Funktelegramms an die Zentraleinheit werden in der Reifendruckkontrollvorrichtung die von den zwei ausgewerteten Perioden des Beschleunigungssignals gespeicherten Daten gelöscht, insbesondere dadurch, dass sie mit den Daten der beiden nachfolgenden Perioden des Beschleunigungssignals überschrieben werden.

Stellt sich beim Vergleichen der Dauern der beiden Perioden des Beschleunigungssignals heraus, dass sie voneinander abweichen, wird in einem Schritt 9 die Größe der Abweichung bestimmt und in einem Schritt 10 mit einem vorgegebenen Toleranzwert verglichen. Ist die Differenz der beiden Perioden nicht größer als der vorgegebene Toleranzwert, wird im Schritt 11 der aus den beiden Perioden bestimmte "zweite" Messwert an die Zentraleinheit 22 übermittelt.

Stellt sich beim Vergleichen der Dauern der beiden Perioden im Schritt 8 jedoch heraus, dass sie um mehr als den vorgegebenen Toleranzwert voneinander abweichen, werden diese beiden Perioden des Beschleunigungssignals verworfen und das Verfahren wird mit dem Schritt 6 fortgesetzt, in welchem aus den beiden nachfolgenden Perioden des Beschleunigungssignals die Drehzahl des Rades bestimmt wird.

Das Zeitintervall Δt₂ kann der Zentraleinheit als bekannt vorgegeben werden, wenn es in der Steuerung der Reifendruckkontrollvorrichtung nicht möglich ist, das Zeitintervall Δt₂ autonom zu ändern. In diesem Fall muss die Dauer des zweiten Zeitintervalls Δt₂ im Funktelegramm an die Zentraleinheit nicht mitübertragen werden.

Wenn die Reifendruckkontrollvorrichtung so programmiert ist, dass sie stets zwei Umdrehungen des Rades auswertet, um die Drehzahl zu ermitteln, was einem Drehwinkel ϕ = 720° entspricht, dann kann auch dieses der Zentraleinheit als bekannt vorgegeben werden. Die Zentraleinheit kann aus dem Drehwinkel ϕ und dem übertragenen Messwert der Drehzahl die Dauer der zweiten Zeitspanne T2 errechnen, die das Rad für die zwei Umdrehungen gebraucht hat, und aus dem mitübertragenen Zeitintervall Δt₂ kann die Zentraleinheit ermitteln, wie lang der Zeitraum zurückliegt, für welchen die Reifendruckkontrollvorrichtung die Drehzahl ermittelt hat. Das ist von Bedeutung für den nachfolgenden Vergleich der von der Reifendruckkontrollvorrichtung übermittelten Drehzahl mit den von den stationären zweiten Sensoren ermittelten Drehzahlen oder Winkelgeschwindigkeiten.

Zeitlich unabhängig von den in der Reifendruckkontrollvorrichtung ablaufenden Schritten finden die Messungen durch die den Radpositionen fest zugeordneten ABS-Sensoren statt. Für ein Fahrzeug mit vier Rädern gibt es vier ABS-Sensoren für die Positionen vorne rechts (VR), vorne links (VL), hinten rechts (HR) und hinten links (HL). Jeder ABS-Sensor zählt in einem Schritt 12 unabhängig von den anderen ABS-Sensoren und unabhängig von den Reifendruckkontrollvorrichtungen z. B. die an ihm vorbeilaufenden Zähne eines mit dem Rad rotierenden Zahnkranzes wiederholt in aufeinander folgenden gleichbleibenden Zeitabschnitten ΔT, welche der Zentraleinheit 22 als bekannt vorgegeben werden kann. In einer Recheneinheit 23 können daraus in einem Schritt 13 für die verschiedenen Radpositionen die Drehzahlen oder Winkelgeschwindigkeiten berechnet werden. Die Recheneinheit 23 kann dem ABS-Sensor oder der Zentraleinheit 22 zugeordnet sein.

Alternativ ist es möglich, für das Bestimmen der Drehzahl oder der Winkelgeschwindigkeit nicht gleiche Zeitabschnitte ΔT zugrunde zu legen, sondern für eine vorgegebene Anzahl von Zähnen, insbesondere für die gesamte Anzahl der Zähne des ABS-Zahnkranzes, die Zeitspanne ΔT zu ermitteln, welche benötigt wird, um die vorgegebene Anzahl der Zähne des ABS-Zahnkranzes zu zählen. In diesem Fall müssen anstelle der Anzahl der Zähne die variablen Zeitabschnitte ΔT an die Zentraleinheit 22 übermittelt werden, wohingegen die Gesamtzahl der Zähne des ABS-Zahnkranzes der Zentraleinheit 22 als bekannt vorgegeben sein kann.

Um die korrekten Zuordnungen zu ermitteln, kann die Zentraleinheit 22 einerseits auf die von den Reifendruckkontrollvorrichtungen übermittelten Daten zugreifen, welche die Kennung, die Drehzahl oder die Winkelgeschwindigkeit der Reifendruckkontrollvorrichtung und den zugehörigen Zeitraum ihrer Erfassung enthalten, nämlich die zweiten Messwerte M2, und auf der anderen Seite auf die von den ABS-Sensoren stammenden Drehzahlen oder Winkelgeschwindigkeiten, das sind die ersten Messwerte M1, verbunden mit dem Zeitraum, für den sie bestimmt wurden, zugreifen.

Das anhand der Figur 1 erläuterte Verfahren setzt sich fort in dem in Figur 2 dargestellten Verfahrensablauf. Die von den ABS-Sensoren stammenden ersten Messwerte M1 werden für aufeinanderfolgende Zeitspannen ΔT in der Zentraleinheit 22 unter der zugehörigen Radposition VR bzw. VL bzw. HR bzw. HL gespeichert. Das geschieht im Schritt 13 oder 14. Die zeitnah von den Reifendruckkontrollvorrichtungen übermittelten zweiten Messwerte M2 werden im Schritt 14 in der Zentraleinheit 22 gespeichert. In Figur 2 ist im Schritt 14 der Übersichtlichkeit halber nur das Signal M2 von einer der Reifendruckkontrollvorrichtungen angegeben.

Im nächsten Schritt 15 vergleicht die Zentraleinheit 22 die mit den Messwerten verknüpften Zeitangaben und stellt fest, welche der von den vier ABS-Sensoren stammenden Messwerte M1 zeitgleich oder zeitnah mit dem Messwert M2 der einen Reifendruckkontrollvorrichtung erfasst wurden. Diese Messwerte M1 werden im Schritt 15 ausgewählt und im Schritt 16 mit dem Messwert M2 verglichen.

Im Schritt 17 wird die zum Messwert M2 gehörende Kennung unter derjenigen der vier Radpositionen gespeichert, deren Messwert M1 die geringste Abweichung vom Messwert M2 zeigt. Die Speicherung erfolgt in einer Matrix, welche für jede mögliche Zuordnung einen Zähler enthält, also insgesamt 16 Zähler. Wurde durch den Vergleich in Schritt 16 also z. B. festgestellt, dass der Messwert M2, der mit einer bestimmten Kennung verknüpft ist, am besten mit dem Merkmal M1 übereinstimmt, welches mit der Position VL verknüpft ist, dann wird in den Zähler, welcher der bestimmten Kennung und der Position VL zugeordnet ist, der Zählerstand um EINS erhöht. Dieses wird wiederholt für jeden von den Reifendruckkontrollvorrichtungen übermittelten Messwert M2 durchgeführt und für jede Übereinstimmung eines Messwertes M2 mit einem der Messwerte M1 wird in dem Zähler, welcher der zugehörigen Kennung und der entsprechenden Radposition zugeordnet ist, der Zählerstand um EINS erhöht. Das geschieht im Schritt 18.

Nach dem Schritt 18 können die ersten Messwerte M1, welche der Eintragung in die Matrix zugrunde lagen, gelöscht werden, insbesondere dadurch, dass sie mit den nachfolgenden ersten Messwerten M1 überschrieben werden.

In einem Schritt 19 wird nach jeder Erhöhung eines Zählerstandes geprüft, ob in den vier Zählern, die einer der vier Radpositionen zugewiesen sind, eine der vier Kennungen einen Zählerstand erreicht hat, welcher signifikant höher ist als der für die anderen drei Kennungen erreichte Zählerstand. Solange das nicht der Fall ist, wird für die entsprechende Reifendruckkontrollvorrichtung das Verfahren gemäß Figur 1 nicht beendet. Hat sich jedoch der Zählerstand für eine Kennung gepaart mit einer bestimmten Radposition signifikant über die drei anderen Zählerstände für dieselbe Radposition erhöht, wird im Schritt 20 die Kennung unter der entsprechenden Radposition gespeichert und in einem Schritt 21 durch ein von der Zentraleinheit 22 an die entsprechende Reifendruckkontrollvorrichtung gesendetes Funksignal das Zuordnungsverfahren für die betreffende Radposition beendet. Danach findet in der zugeordneten Reifendruckkontrollvorrichtung nur noch die normale Reifendruckkontrolle statt.

Das Beenden des Zuordnungsverfahrens kann für die vier Reifendruckkontrollvorrichtungen getrennt entschieden und bewirkt werden. Sobald drei Zuordnungen das Kriterium für das Beenden des Zuordnungsverfahrens erfüllt haben, kann auch das Verfahren für die vierte und letzte Zuordnung beendet werden, da sich die letzte Zuordnung zwingend aus den drei vorherigen Zuordnungen ergibt.

Die Zuordnungsverfahren können aber auch gleichzeitig beendet werden.

Figur 3 zeigt schematisch, um welchen Winkel Δϕ sich ein linksherum drehendes Rad 24 in dem Zeitintervall Δt₂ links herum weiterdreht, welches zwischen dem Ende des Erfassens einer Messgröße, aus welcher die Drehzahl des Rades 24 abgeleitet werden kann, und dem Senden des daraus gewonnenen zweiten Messwertes M2 vergeht. Bei einer Geschwindigkeit von ca. 15 km/h wird die Reifendruckkontrollvorrichtung aktiviert. Es sei angenommen, dass die Reifendruckkontrollvorrichtung bei 15 km/h aus der Winkelposition 25 heraus sendet, welche am Beginn der Bahn 26 liegt. Während die Geschwindigkeit bis auf 100 km/h zunimmt, wandert die Position, aus welcher die Reifendruckkontrollvorrichtung sendet, entlang der Bahn 26 linksherum bis zur Position 27. Bei Überschreiten von 100 km/h bzw. bei Überschreiten einer dieser Geschwindigkeit entsprechenden Raddrehzahl, welche mittels des Beschleunigungssensors in der Reifendruckkontrollvorrichtung bestimmt wird, verkürzt diese das Zeitintervall Δt₂ in einer Stufe, so dass sich bei Geschwindigkeiten zwischen 100 km/h und z. B. 200 km/h die Position der sendenden Reifendruckkontrollvorrichtung entlang der Bahn 28 verschiebt. Die dargestellte Verschiebung erfolgt für die zwei Geschwindigkeitsbereiche jeweils unter der Voraussetzung, dass sich die Reifendruckkontrollvorrichtung am Ende des Erfassens der Messgröße, aus welcher die Drehzahl abgeleitet werden kann, stets in derselben Winkelstellung befindet, z. B. in der 3-Uhr-Stellung 29.

### Bezugszeichenliste

- 1 - 21: Schritte
- 22: Zentraleinheit
- 23: Recheneinheit
- 24: Rad
- 25: Winkelposition
- 26: Bahn
- 27: Position
- 28: Bahn
- 29: 3-Uhr-Stellung

- M1: erster Messwert
- M2: zweiter Messwert
- T1: erste Zeitspanne
- T2: zweite Zeitspanne
- ΔT: Zeitabschnitt
- Δt₁: erstes Zeitintervall
- Δt₂: zweites Zeitintervall
- ϕ: vorgegebener Drehwinkel
- Δϕ: durch Δt₂ verursachte Verschiebung einer Winkelposition

## Patentansprüche

1. Verfahren zum Zuordnen von Reifendruckkontrollvorrichtungen eines Reifendruckkontrollsystems eines Fahrzeugs zu den verschiedenen Positionen, an welchen jeweils ein Rad (24) des Fahrzeugs montiert ist, welches folgende Bestandteile aufweist:
• Eine der Anzahl der Radpositionen entsprechende Anzahl von ersten Sensoren, welche jeweils einer der Radpositionen ortsfest zugeordnet sind und die Drehzahl oder Winkelgeschwindigkeit des in der Radposition montierten Rades (24) erfassen können;
• eine mit der Anzahl der montierten Räder (24) übereinstimmende Anzahl von Reifendruckkontrollvorrichtungen, welche an den Rädern (24) mit diesem mitrotierend angebracht, mit einer individuellen Kennung versehen sind und einen zweiten Sensor zur Bestimmung einer Messgröße enthalten, aus deren zeitlichem Verlauf die Drehzahl des jeweiligen Rades (24) oder die Winkelgeschwindigkeit des Rades (24) abgeleitet werden kann;
• eine Zentraleinheit (22), in welcher die Zuordnung der Reifendruckkontrollvorrichtungen zu jeweils einer Radposition, nämlich die Kennung der in der Radposition befindlichen Reifendruckkontrollvorrichtung in Verbindung mit der zugehörigen Radposition, gespeichert werden kann,
• wobei der Zentraleinheit (22) bekannt ist, welcher erster Sensor welcher Radposition zugeordnet ist;
in dem Zuordnungsverfahren
• liefern die ersten Sensoren wiederholt, nämlich für aufeinanderfolgende Zeitabschnitte ΔT, einen Messwert M1, welcher ein Maß für die Drehzahl oder für die Winkelgeschwindigkeit jenes Rades (24) ist, welchem der jeweilige erste Sensor zugeordnet ist;
• senden die Reifendruckkontrollvorrichtungen in zeitlichen Abständen ihre individuelle Kennung an die Zentraleinheit (22);
• wird in jeder rotierenden Reifendruckkontrollvorrichtung der Verlauf der Messgröße, aus welcher die Drehzahl oder die Winkelgeschwindigkeit des zugehörigen Rades (24) abgeleitet werden kann, mittels des zweiten Sensors in Abhängigkeit von der Zeit erfasst, einer Tiefpassfilterung unterzogen, aus dem gefilterten Verlauf ein zweiter Messwert M2 bestimmt, welcher ein Maß für die Drehzahl bzw. für die Winkelgeschwindigkeit des zugehörigen Rades (24) ist, und zusammen mit der Kennung der Reifendruckkontrollvorrichtung an die Zentraleinheit (22) übermittelt;
• in der Zentraleinheit (22) werden als Folge dieser Übermittlung die von den Reifendruckkontrollvorrichtungen übermittelten zweiten Messwerte M2 mit den von den ersten Sensoren aller Räder (24) zeitnah erfassten Messwerten M1 verglichen und die Kennung der Reifendruckkontrollvorrichtung jeweils unter jener Radposition gespeichert, in welcher der vom ersten Sensor gelieferte Messwert M1 am besten mit dem Messwert M2 übereinstimmt;
**dadurch gekennzeichnet, dass**
• der Verlauf der Messgröße, aus welcher die Drehzahl oder die Winkelgeschwindigkeit des zugehörigen Rades (24) abgeleitet werden kann, über einen vorgegebenen Drehwinkel ϕ des Rades (24) punktweise erfasst wird,
• in einem an das Erfassen anschließenden ersten Zeitintervall Δt₁ der zeitliche Verlauf der während der Drehung des Rades (24) um den vorgegebenen Drehwinkel ϕ erfassten Messgröße mittels eines digitalen Tiefpassfilters der Tiefpassfilterung unterzogen und das als Folge diskreter Werte vorliegende Ergebnis der Filterung gespeichert wird,
• und dass jede Reifendruckkontrollvorrichtung am Ende eines zweiten Zeitintervalls Δt₂, dessen Dauer nicht kleiner ist als das erste Zeitintervall Δt₁, den zweiten Messwert M2 zusammen mit ihrer Kennung an die Zentraleinheit (22) übermittelt.

2. Verfahren nach Anspruch 1, **dadurch gekennzeichnet, dass** als zweiter Sensor ein solcher Sensor, z. B. ein Beschleunigungssensor, verwendet wird, welcher ein Signal mit einem periodischen Verlauf liefert, wobei die Periode konstant ist, solange wie sich das Fahrzeug mit konstanter Geschwindigkeit geradeaus bewegt.

3. Verfahren nach einem der vorstehenden Ansprüche, **dadurch gekennzeichnet, dass** die Dauer des ersten Zeitintervalls Δt₁ konstant ist.

4. Verfahren nach einem der vorstehenden Ansprüche, **dadurch gekennzeichnet, dass** das Ende des ersten Zeitintervalls Δt₁ so gelegt wird, dass es mit jenem Zeitpunkt zusammenfällt, an welchem das Ende des gefilterten Verlaufs der vom zweiten Sensor erfassten Messgröße das Tiefpassfilter verlassen hat und in der Reifendruckkontrolleinrichtung gespeichert ist.

5. Verfahren nach Anspruch 3 oder 4, **dadurch gekennzeichnet, dass** das erste Zeitintervall Δt₁, in welchem in den Reifendruckkontrollvorrichtungen der Verlauf der vom zweiten Sensor erfassten Messgröße einer Tiefpassfilterung unterzogen wird, oder der Drehwinkel Δϕ, um welchem sich das Rad (24) während des erstem Zeitintervalls Δt₁ und/oder des zweiten Zeitintervalls Δt₂ weitergedreht hat, der Zentraleinheit (22) entweder als bekannt vorgegeben ist oder ihr von der Reifendruckkontrollvorrichtung zusammen mit ihrer Kennung und mit der gefilterten Messgröße oder dem daraus abgeleiteten zweiten Messwert M2 als ein dritter Messwert M3 übermittelt wird.

6. Verfahren nach einem der vorstehenden Ansprüche, **dadurch gekennzeichnet, dass** der Messwert M2, ggf. auch der Messwert M3, in der Zentraleinheit (22) zusätzlich dazu verwendet wird, um die Winkelposition zu bestimmen, welche das Rad (24) am Ende des ersten Zeitintervalls Δt₁ und/oder am Ende des zweiten Zeitintervalls Δt₂ hat.

7. Verfahren nach Anspruch 5 oder 6, **dadurch gekennzeichnet, dass** die vorgegebene Dauer des ersten Zeitintervalls Δt₁, in welchem in den Reifendruckkontrollvorrichtungen die erfasste Messgröße einer Tiefpassfilterung unterzogen wird, und/oder die Dauer des zweiten Zeitintervalls Δt₂ geschwindigkeitsabhängig gewählt wird, und zwar derart, dass die Dauer des ersten Zeitintervalls Δt₁ und/oder die Dauer des zweiten Zeitintervalls Δt₂ mit zunehmender Geschwindigkeit des Fahrzeuges abnimmt.

8. Verfahren nach Anspruch 7, **dadurch gekennzeichnet, dass** die vorgegebene Dauer des ersten Zeitintervalls Δt₁ und oder die vorgegebene Dauer des zweiten Zeitintervalls Δt₂ stufenweise an die Geschwindigkeit des Fahrzeuges oder an die Drehzahl bzw. Winkelgeschwindigkeit des betreffenden Rades (24) angepasst wird.

9. Verfahren nach einem der vorstehenden Ansprüche, **dadurch gekennzeichnet, dass** die ersten Sensoren die Messgröße, welche ein Maß für die Drehzahl oder für die Winkelgeschwindigkeit ist, insbesondere die Drehzahl bzw. die Winkelgeschwindigkeit selbst, messen und das Messergebnis für eine vorgegebene Dauer speichern.

10. Verfahren nach Anspruch 9, **dadurch gekennzeichnet, dass** die Messergebnisse der ersten Sensoren für eine Zeitspanne T1 gespeichert werden, die zweimal bis fünfmal so lang ist wie der vorgegebene Zeitabschnitt ΔT für die einzelne Messung, wobei der Zeitabschnitt ΔT für die einzelne Messung zwischen 10 ms und 100 ms, vorzugsweise zwischen 10 ms und 50 ms, insbesondere zwischen 15 ms und 30 ms liegt.

11. Verfahren nach einem der vorstehenden Ansprüche, **dadurch gekennzeichnet, dass** die Reifendruckkontrollvorrichtungen im Zuordnungsverfahren in kürzeren Zeitabständen senden als in einem Normalbetrieb des Reifendruckkontrollsystems, in welchem der Zentraleinheit (22) von allen Reifendruckkontrollvorrichtungen nur Kennungen übermittelt werden, die bereits in der Zentraleinheit (22) gespeichert sind.

12. Verfahren nach einem der vorstehenden Ansprüche, **dadurch gekennzeichnet, dass** in den Reifendruckkontrollvorrichtungen der zweite Sensor seine Messgröße mehrmals jeweils für eine zweite Zeitspanne T2 erfasst, welche das Rad (24) benötigt, um sich um wenigstens 180° oder um ein ganzzahliges Vielfaches von 180° zu drehen, vorzugsweise um 720°.

13. Verfahren nach Anspruch 12, **dadurch gekennzeichnet, dass** der vorgegebene Drehwinkel ϕ, um welchen sich die Räder (25) für das Erfassen der Messgröße des zweiten Sensors drehen sollen, so gewählt wird, dass die Messung in einer vorgegebenen Drehwinkelstellung des zweiten Sensors beginnt, insbesondere in einer Drehwinkelstellung, in welcher der Wechselanteil der Amplitude des gefilterten Messsignals des zweiten Sensors einen Nulldurchgang hat.

14. Verfahren nach Anspruch 13, **dadurch gekennzeichnet, dass** in den Reifendruckkontrollvorrichtungen anhand des gefilterten Signals die zweite Zeitspanne T2 gemessen wird, welche das Rad (24) für seine Drehung um den vorgegebenen Drehwinkel ϕ benötigt.

15. Verfahren nach Anspruch 14, **dadurch gekennzeichnet, dass** als Maß für die Drehzahl oder die Winkelgeschwindigkeit des Rades (24) die zweite Zeitspanne T2, die das Rad (24) für eine Drehung um den vorgegebenen Drehwinkel ϕ benötigte, oder die aus dem vorgegebenen Drehwinkel ϕ und der dafür benötigten zweiten Zeitspanne T2 in der Reifendruckkontrollvorrichtung berechnete Drehzahl oder Winkelgeschwindigkeit des Rades (24) am Ende des zweiten Zeitintervalls Δt₂ zusammen mit der Kennung der Reifendruckkontrollvorrichtung und ggf. zusammen mit dem zweiten Zeitintervall Δt₂ oder mit dem Drehwinkel Δϕ, um welchen sich das Rad (24) während des zweiten Zeitintervalls Δt₂ weitergedreht hat, an die Zentraleinheit (22) übermittelt wird.

16. Verfahren nach einem der vorstehenden Ansprüche, **gekennzeichnet durch** die Verwendung eines Tiefpassfilters, dessen Grenzfrequenz zwischen 1 Hz und 5 Hz liegt.

17. Verfahren nach einem der vorstehenden Ansprüche, **dadurch gekennzeichnet, dass** als zeitnah erfasste Messwerte M1 jene Messwerte ausgewählt werden, die in mehreren aufeinander folgenden Zeitabschnitten ΔT, insbesondere in zwei aufeinanderfolgenden Zeitabschnitten ΔT, gemessen wurden, welche sich mit dem zweiten Zeitintervall Δt₂ überlappen oder an dessen Rand liegen.

18. Verfahren nach einem der vorstehenden Ansprüche, **dadurch gekennzeichnet, dass** als zeitnah erfasste Messwerte M1 jene Messwerte M1 ausgewählt werden, die in nicht mehr als fünf aufeinander folgenden Zeitabschnitten ΔT, insbesondere in zwei aufeinanderfolgenden Zeitabschnitten ΔT, gemessen wurden, wobei das Ende des zweiten Zeitintervalls Δt₂, in welchem in einer Reifendruckkontrollvorrichtung eine Tiefpassfilterung des Verlaufs der vom zweiten Sensor erfassten Messgröße und die Übermittlung des zweiten Messwerts M2 sowie der Kennung an die Zentraleinheit (22) erfolgen, in den nicht mehr als fünf Zeitabschnitten ΔT oder an deren Rand liegt.

19. Verfahren nach einem der vorstehenden Ansprüche, **dadurch gekennzeichnet, dass** die zweiten Messwerte M2 der Zentraleinheit (22) zweimal übermittelt werden, nämlich einmal am Ende des zweiten Zeitintervalls Δt₂ und ein zweites Mal nach einer Weiterdrehung des Rades (24) um weniger als eine Umdrehung, insbesondere nach einer Weiterdrehung des Rades (24) um eine halbe Umdrehung.

20. Verfahren nach einem der vorstehenden Ansprüche, **dadurch gekennzeichnet, dass** es wiederholt durchgeführt wird, dass die in jedem Durchlauf des Verfahrens gewonnenen Zuordnungen in der Zentraleinheit (22) gesammelt werden, dass die gesammelten Zuordnungen nach der Häufigkeit ihres Auftretens analysiert werden und dass für jede Radposition die ihr am häufigsten zugeordnete Kennung gespeichert wird.

21. Verfahren nach Anspruch 20, **dadurch gekennzeichnet, dass** es nach einem Fahrtbeginn dann verkürzt, d. h. mit einer kleineren Anzahl von Wiederholungen als bei einer erstmaligen Speicherung einer bestimmten Zuordnung, durchgeführt wird, wenn der Zentraleinheit (22) zu den gegebenen Radpositionen erneut jene Kennung übermittelt wird, die schon während der vorausgegangenen Fahrt als häufigste Kennung gespeichert wurde.

## Claims

1. A method for the allocating of tire pressure control devices of a tire pressure control system of a vehicle to the different positions at which respectively a wheel (24) of the vehicle is mounted, which system has the following components:
• a number of first sensors, corresponding to the number of wheel positions, which are each fixedly allocated to one of the wheel positions and can detect the rotation speed or angular speed of the wheel (24) which is mounted in the wheel position;
• a number of tire pressure control devices, coinciding with the number of the mounted wheels (24), which devices are mounted on the wheels (24) rotating together with these, are provided with an individual identifier and contain a second sensor for determining a measurand, from the chronological development of which the rotation speed of the respective wheel (24) or the angular speed of the wheel (24) can be derived;
• a central unit (22), in which the allocation of the tire pressure control devices to respectively one wheel position, namely the identifier of the tire pressure control device situated in the wheel position in connection with the associated wheel position, can be stored,
• wherein it is known by the central unit (22) which first sensor is allocated to which wheel position;
in the allocation method
• the first sensors deliver repeatedly, namely for successive time segments ΔT, a measured value M1, which is a measurement for the rotation speed or for the angular speed of the wheel (24) to which the respective first sensor is allocated,
• the tire pressure control devices send their individual identifier to the central unit (22) in chronological intervals;
• in every tire pressure control device the development of the measurand from which the rotation speed or the angular speed of the associated wheel (24) can be derived, is detected in dependence on time by means of the second sensor, is subjected to a low pass filtering, from the filtered development of the measurand is determined a second measured value M2, which is a measure for the rotation speed or respectively for the angular speed of the associated wheel (24) and is transmitted to the central unit (22) together with the identifier of the tire pressure control device;
• in the central unit (22), as a result of this transmittal, the second measured values M2 transmitted by the tire pressure control devices are compared with the measured values M1 detected in a timely manner by the first sensors of all wheels (24), and the identifier of the tire pressure control device is stored respectively under that wheel position in which the measured value M1 delivered by the first sensor best coincides with the measured value M2;
**characterized in that**
• the development of the measurand, from which the rotation speed or the angular speed of the associated wheel (24) can be derived, is detected pointwise over a predetermined rotation angle (p of the wheel (24),
• in a first time interval Δt₁ following the detection the chronological development of the measurand detected during the rotation of the wheel (24) about the predetermined rotation angle (p is subjected to a low pass filtering by means of a digital low pass filter and the result of the filtering, which is constituted by a sequence of discrete values, is stored,
• and that each tire pressure control device transmits at the end of a second time interval Δt₂, the duration of which is not less than the first time interval Δt₁, the second measured value M2 together with its identifier to the central unit (22).

2. The method according to claim 1, **characterized in that** as a second sensor such a sensor, e. g. an acceleration sensor, is used which delivers a signal with a periodic development, wherein the period is constant as long as the vehicle moves in a straight line with a constant speed.

3. The method according to any of the preceding claims, **characterized in that** the duration of the first time interval Δt₁ is constant.

4. The method according to any of the preceding claims, **characterized in that** the end of the first time interval Δt₁ is placed such that it coincides with the moment at which the end of the filtered development of the measurand detected by the second sensor has left the low pass filter and is stored in the tire pressure control device.

5. The method according to claim 3 or 4, **characterized in that** the first time interval Δt₁ in which, in the tire pressure control devices, the development of the measurand detected by the second sensor is subjected to a low pass filtering, or the rotation angle Δϕ about which the wheel (24) has further rotated during the first time interval Δt₁ and/or the second time interval Δt₂, is either given as known to the central unit (22) or is transmitted to it as a third measured value M3 by the tire pressure control device together with its identifier and with the filtered measurand or with the second measured value M2 derived therefrom.

6. The method according to any of the preceding claims, **characterized in that** the measured value M2, if applicable also the measured value M3, is additionally used in the central unit (22) in order to determine the angular position which the wheel (24) has at the end of the first time interval Δt₁ and/or at the end of the second time interval Δt₂.

7. The method according to claim 5 or 6, **characterized in that** the predetermined duration of the first time interval Δt₁ in which the detected measurand is subjected to a low pass filtering in the tire pressure control devices, and/or the duration of the second time interval Δt₂ is selected in a speed-dependent manner, and namely such that the duration of the first time interval Δt₁ and/or the duration of the second time interval Δt₂ decreases with increasing speed of the vehicle.

8. The method according to claim 7, **characterized in that** the predetermined duration of the first time interval Δt₁ and/or the predetermined duration of the second time interval Δt₂ is adapted in stages to the speed of the vehicle or to the rotation speed or respectively to the angular speed of the wheel (24) concerned.

9. The method according to any of the preceding claims, **characterized in that** the first sensors measure the measurand which is a measure for the rotation speed or for the angular speed, in particular the rotation speed or respectively the angular speed itself, and store the measurement result for a predetermined duration.

10. The method according to claim 9, **characterized in that** the measurement results of the first sensors are stored for a time span T1, which is twice to five times as long as the predetermined time segment ΔT for the individual measurement, the time segment ΔT for the individual measurement lying between 10 ms and 100 ms, preferably between 10 ms and 50 ms, in particular between 15 ms and 30 ms.

11. The method according to any of the preceding claims, **characterized in that** the tire pressure control devices send in shorter time intervals in the allocation method than in a normal operation of the tire pressure control system, in which only identifiers which are already stored in the central unit (22) are transmitted to the central unit (22) from all tire pressure control devices.

12. The method according to any of the preceding claims, **characterized in that** in the tire pressure control devices the second sensor detects its measurand several times, in each case for a second time span T2, which the wheel (24) requires in order to rotate about at least 180° or about a whole-number multiple of 180°, preferably about 720°.

13. The method according to claim 12, **characterized in that** the predetermined rotation angle ϕ about which the wheels (25) are to rotate for the detecting of the measurand of the second sensor, is selected so that the measuring begins in a predetermined rotation angle position of the second sensor, in particular in a rotation angle position in which the alternating component of the amplitude of the filtered measurement signal of the second sensor has a zero crossing.

14. The method according to claim 13, **characterized in that** in the tire pressure control devices the second time span T2, which the wheel (24) requires for its rotation about the predetermined rotation angle ϕ, is measured by means of the filtered signal.

15. The method according to claim 14, **characterized in that** as a measure for the rotation speed or for the angular speed of the wheel (24), the second time span T2 which the wheel (24) required for a rotation about the predetermined rotation angle ϕ, or the rotation speed or angular speed of the wheel (24) calculated from the predetermined rotation angle ϕ and the second time span T2 required therefor in the tire pressure control device at the end of the second time interval Δt₂, is transmitted to the central unit (24) together with the identifier of the tire pressure control device and, if applicable, together with the second time interval Δt₂ or together with the rotation angle Δϕ, about which the wheel (24) has further rotated during the second time interval Δt₂.

16. The method according to any of the preceding claims, **characterized by** the use of a low pass filter, the threshold frequency of which lies between 1 Hz and 5 Hz.

17. The method according to any of the preceding claims, **characterized in that** as measured values M1 detected in a timely manner, those measured values are selected which were measured in several successive time segments ΔT, particularly in two successive time segments AT, which overlap with the second time interval Δt₂ or lie at its boundary.

18. The method according to any of the preceding claims, **characterized in that** as measured values M1 detected in a timely manner, those measured values M1 are selected which were measured in not more than five successive time segments AT, particularly in two successive time segments ΔT, wherein the end of the second time interval Δt₂, in which in a tire pressure control device a low pass filtering of the development of the measurand detected by the second sensor and the transmittal of the second measured value M2 as well as the identifier to the central unit (22) takes place, lies in the no more than five time segments AT or at the boundary thereof.

19. The method according to any of the preceding claims, **characterized in that** the second measured values M2 are transmitted twice to the central unit (22), namely once at the end of the second time interval Δt₂ and a second time after a further rotation of the wheel (24) about less than one revolution, in particular after a further rotation of the wheel (24) about a half revolution.

20. The method according to any of the preceding claims, **characterized in that** it is carried out repeatedly, that the allocations obtained in each run of the method are collected in the central unit (22), that the collected allocations are analyzed according to the frequency of their occurrence, and that for each wheel position the identifier is stored which is allocated to it the most frequently.

21. The method according to claim 20, **characterized in that** after a start of a journey it is then carried out in a shortened manner, i.e. with a smaller number of repetitions than with a storage for the first time of a particular allocation, if, to the given wheel positions, that identifier, which was already stored during the preceding journey as the most frequent identifier, is transmitted again to the central unit (22).

## Revendications

1. Procédé d'association de dispositifs de contrôle de pression de gonflage de pneumatiques d'un système de contrôle de pression de gonflage de pneumatiques d'un véhicule à différentes positions, dans lesquelles respectivement une roue (24) d'un véhicule est montée, lequel présente les composants suivants :
• un nombre de premiers capteurs correspondant au nombre de positions de roue, lesquelles sont respectivement associées de manière fixe à une position de roue et peuvent détecter le nombre de tours ou la vitesse angulaire de la roue (24) montée dans la position de roue ;
• un nombre de dispositifs de contrôle de pression de gonflage de pneumatiques en accord avec le nombre de roues (24) montées, lesquels sont rapportés en pouvant être en rotation avec celles-ci sur les roues (24), sont munis d'un identifiant individuel et contiennent un deuxième capteur pour la détermination d'une grandeur de mesure, dont l'évolution dans le temps permet de déduire le nombre de tours de la roue respective (24) ou la vitesse angulaire de la roue (24) ;
• une unité centrale (22), dans laquelle l'association des dispositifs de contrôle de pression de gonflage des pneumatiques à respectivement une position de roue, à savoir l'identifiant du dispositif de contrôle de la pression des pneumatiques se trouvant dans la position de la roue en liaison avec la position de la roue correspondante, peut être mémorisé,
• où l'unité centrale (22) sait quelle position de roue est associée à quel premier capteur ;
dans le procédé d'association
• les premiers capteurs donnent de manière répétée, c'est-à-dire à des laps de temps ΔT successifs, une valeur de mesure M1, laquelle est une mesure pour le nombre de tours ou pour la vitesse angulaire de la roue (24) à laquelle est respectivement associé le premier capteur ;
• les dispositifs de contrôle de pression de gonflage des pneumatiques envoient leur identifiant individuel vers l'unité centrale (22) à des intervalles de temps ;
• si, dans un dispositif de contrôle de pression de gonflage des pneumatiques donné, l'évolution de la grandeur de mesure à partir de laquelle le nombre de tours ou la vitesse angulaire de la roue (24) correspondante peuvent être dérivés, est détectée au moyen du deuxième capteur en fonction du temps, elle est soumise à un filtrage passe-bas, une deuxième valeur de mesure est déterminée à partir de l'évolution filtrée, laquelle est une mesure pour le nombre de tours, respectivement pour la vitesse angulaire de la roue (24) correspondante, et est transmise ensemble avec l'identifiant du dispositif de contrôle de pression de gonflage des pneumatiques à l'unité centrale (22) ;
• dans l'unité centrale (22), les deuxièmes valeurs de mesure M2 transmises par les dispositifs de contrôle de pression de gonflage des pneumatiques en tant que résultat de cette transmission sont comparées avec les valeurs de mesure M1 détectées en même temps par les premiers capteurs de toutes les roues (24) et l'identifiant du dispositif de contrôle de la pression de gonflage des pneumatiques est mémorisé à la position de roue à laquelle la valeur de mesure M1 donnée par le premier capteur correspond le mieux avec la deuxième valeur de mesure M2 ;
**caractérisé en ce que**
• l'évolution de la grandeur de mesure à partir de laquelle sont déduits le nombre de tours ou la vitesse angulaire de la roue (24) correspondante est détectée point par point par l'intermédiaire d'un angle de rotation ϕ de la roue (24),
• dans un premier intervalle de temps Δt₁ suivant la détection, l'évolution dans le temps de la valeur de mesure détectée pendant la rotation de la roue (24) de l'angle de rotation ϕ prédéfini, est soumise au filtrage passe-bas au moyen d'un filtre passe-bas et le résultat du filtrage présent sous la forme d'une suite de valeurs discrètes est mémorisé,
• et que chaque dispositif de contrôle de pression de gonflage des pneus transmet la deuxième valeur de mesure M2 ensemble avec son identifiant vers l'unité centrale (22) à la fin d'un deuxième intervalle de temps Δt₂, dont la durée n'est pas inférieure au premier intervalle de temps Δt₁.

2. Procédé selon la revendication 1, **caractérisé en ce qu'**en tant que deuxième capteur, un capteur, comme par exemple, un accéléromètre, est employé, lequel délivre un signal avec une évolution périodique, où la période est constante tant que le véhicule se déplace droit devant avec une vitesse constante.

3. Procédé selon l'une des revendications précédentes, **caractérisé en ce que** la durée du premier intervalle de temps Δt₁ est constant.

4. Procédé selon l'une des revendications précédentes, **caractérisé en ce que** la fin du premier intervalle de temps Δt₁ est réglée pour qu'elle se situe en même temps que le moment auquel la fin de l'évolution filtrée de la grandeur de mesure détectée par le deuxième capteur a quitté le filtre passe-bas et est mémorisée dans le dispositif de contrôle de la pression de gonflage des pneumatiques.

5. Procédé selon la revendication 3, ou 4, **caractérisé en ce que** le premier intervalle de temps Δt₁ durant lequel l'évolution de la grandeur de mesure détectée par le deuxième capteur est soumise à un filtrage passe-bas dans les dispositifs de contrôle de pression de gonflage des pneumatiques, ou l'angle de rotation ϕ, duquel la roue (24) a continué d'être en rotation pendant le premier intervalle de temps Δt₁ et/ou le deuxième intervalle de temps Δt₂, est soit prédéfini comme connu par l'unité centrale (22), soit lui est transmis ensemble avec son identifiant et avec la valeur de mesure filtrée par le dispositif de contrôle de la pression de gonflage des pneumatiques, ou la deuxième valeur de mesure M2 dérivée de celle-ci est transmise en tant que troisième valeur de mesure M3.

6. Procédé selon l'une des revendications précédentes, **caractérisé en ce que** la valeur de mesure M2, éventuellement, aussi la valeur de mesure M3, sont employées dans l'unité centrale (22) en plus pour déterminer la position angulaire, laquelle est possédée par la roue (24) à la fin du premier intervalle de temps Δt₁ et/ou à la fin du deuxième intervalle de temps Δt₂.

7. Procédé selon la revendication 5, ou 6, **caractérisé en ce que** la durée prédéfinie du premier intervalle de temps Δt₁ dans lequel la valeur de mesure détectée dans les dispositifs de contrôle de pression de gonflage des pneumatiques est soumise à un filtrage passe-bas, et/ou la durée du deuxième intervalle de temps Δt₂ est choisie dépendante de la vitesse, et en l'occurrence, de telle manière que la durée du premier intervalle de temps Δt₁, et/ou la durée du deuxième intervalle de temps Δt₂, diminuent avec une vitesse croissante du véhicule.

8. Procédé selon la revendication 7, **caractérisé en ce que** la durée prédéfinie du premier intervalle de temps Δt₁ et ou la durée prédéfinie du deuxième intervalle de temps Δt₂ sont adaptées de manière échelonnée à la vitesse du véhicule ou au nombre de tours, respectivement à la vitesse angulaire de la roue (24) en question.

9. Procédé selon l'une des revendications précédentes, **caractérisé en ce que** les premiers capteurs mesurent la grandeur de mesure, laquelle est une mesure pour le nombre de tours ou pour la vitesse angulaire, en particulier, le nombre de tours, respectivement, la vitesse angulaire elle-même, et mémorisent le résultat de la mesure pour une durée prédéfinie.

10. Procédé selon la revendication 9, **caractérisé en ce que** les résultats de mesure des premiers capteurs sont mémorisés pour un premier laps de temps T1, qui est deux fois, jusqu'à cinq fois aussi long que l'intervalle de temps prédéfini ΔT pour une seule mesure, où l'intervalle de temps ΔT pour une mesure individuelle se situe entre 10 ms et 100 ms, de préférence entre 10 ms et 50 ms, notamment entre 15 et 30 ms.

11. Procédé selon l'une des revendications précédentes, **caractérisé en ce que** les dispositifs de contrôle de pression de gonflage des pneumatiques envoient dans le procédé d'association dans des intervalles de temps courts, pour un fonctionnement normal du système de contrôle de la pression de gonflage des pneus dans lequel uniquement des identifiants de tous les dispositifs de contrôle de la pression de gonflage des pneumatiques qui sont déjà mémorisés dans l'unité centrale (22), sont transmis.

12. Procédé selon l'une des revendications précédentes, **caractérisé en ce que** dans les dispositifs de contrôle de pression de gonflage des pneumatiques, le deuxième capteur détecte sa grandeur de mesure plusieurs fois chaque fois pour un deuxième intervalle de temps T2 ,lequel est nécessaire à la roue (24) pour faire une rotation d'au moins 180 ° ou un nombre entier de fois 180 °, de préférence de 720 °.

13. Procédé selon la revendication 12, **caractérisé en ce que** l'angle de rotation ϕ prédéfini, lequel les roues (25) doivent parcourir pour la détection de la grandeur de mesure du deuxième capteur est choisi de telle manière que la mesure commence dans une position d'angle de rotation prédéfinie du deuxième capteur, notamment dans une position d'angle de rotation dans laquelle la composante alternative de l'amplitude du signal de mesure filtré du deuxième capteur passe par zéro.

14. Procédé selon la revendication 13, **caractérisé en ce que**, dans les dispositifs de contrôle de pression de gonflage des pneus, le deuxième laps de temps T2, dont la roue (24) a besoin pour sa rotation d'un angle de rotation ϕ prédéfini, est mesuré à l'aide du signal filtré.

15. Procédé selon la revendication 14, **caractérisé en ce qu'**en tant que mesure pour le nombre de tours ou de la vitesse angulaire de la roue (24), le deuxième laps de temps T2, dont a besoin la roue (24) pour une rotation de l'angle de rotation ϕ prédéfini, ou le deuxième laps de temps T2 nécessaire pour une rotation de l'angle de rotation ϕ prédéfini dans le dispositif de contrôle de la pression de gonflage des pneus et le nombre de tours calculé ou la vitesse angulaire de la roue (24) à la fin du deuxième intervalle de temps Δt₂ sont transmis, ensemble avec l'identifiant du dispositif de contrôle de la pression de gonflage des pneus et éventuellement ensemble avec le deuxième intervalle de temps Δt₂ ou avec l'angle de rotation Δϕ lequel est parcouru par la roue (24) pendant le deuxième intervalle de temps Δt₂, à l'unité centrale (22).

16. Procédé selon l'une des revendications précédentes, **caractérisé par** l'utilisation d'un filtre passe-bas dont la fréquence limite se situe entre 1 Hz et 5 Hz.

17. Procédé selon l'une des revendications précédentes, **caractérisé en ce qu'**en tant que valeurs de mesure M1 détectées à l'instant proche, les valeurs de mesure ont été mesurées dans plusieurs intervalle de temps ΔT successifs, notamment dans deux intervalles de temps ΔT se succédant, lesquels se superposent avec le deuxième intervalle de temps Δt₂ ou se situent à sa limite.

18. Procédé selon l'une des revendications précédentes, **caractérisé en ce qu'**en tant que valeurs de mesures M1 détectées à un instant proche, des valeurs de mesure M1 sont choisies qui n'ont pas été mesurées avec plus de cinq intervalles de temps ΔT se succédant, notamment avec deux intervalles de temps ΔT se succédant, où la fin du deuxième intervalle de temps Δt₂, dans lequel sont effectués dans un dispositif de contrôle de la pression de gonflage des pneus un filtrage passe-bas de l'évolution de la grandeur de mesure détectée par le deuxième capteur et la transmission de la deuxième valeur de mesure M2, ainsi que de l'identifiant, vers l'unité centrale (22), se situe dans pas plus de cinq intervalles de temps ΔT ou à leur limite.

19. Procédé selon l'une des revendications précédentes, **caractérisé en ce que** les deuxièmes valeurs de mesure M2 sont transmises deux fois à l'unité centrale (22), à savoir, une fois à la fin du deuxième intervalle de temps Δt₂ et une deuxième fois après une poursuite de la rotation de la roue (24) de moins d'une rotation complète, notamment après une poursuite de la rotation de la roue (24) d'un demi tour.

20. Procédé selon l'une des revendications précédentes, **caractérisé en ce qu'**il est effectué de manière répétée de sorte que les associations réalisées à chaque évolution du procédé sont rassemblées dans l'unité centrale (22), de sorte que les associations rassemblées sont analysées en fonction de leur fréquence et que, pour chaque position de roue, leur identifiant associé le plus souvent est mémorisé.

21. Procédé selon la revendication 20, **caractérisé en ce qu'**il se raccourcit après un début de parcours, c'est-à-dire qu'il est exécuté avec un nombre plus petit de répétitions que pour la première mémorisation d'une association donnée, lorsque l'identification donnée pour une position de roue donnée est transmise à l'unité centrale (22), qui a déjà été mémorisée en tant qu'identifiant le plus courant pendant le parcours précédent.
